# EUROPEAN PATENT SPECIFICATION

(11) **EP 3 717 352 B1**
(45) Date of publication and mention of the grant of the patent: **21.01.2026**
(21) Application number: 18836611.6
(22) Date of filing: 18.12.2018
(51) Int. Cl.: B64U 10/13, G08G 5/21, G08G 5/32, G08G 5/34, G08G 5/55, G08G 5/80, G05D 1/00, G08G 5/20, G08G 5/57, G08G 5/59

(54) **AUTONOMOUS UNMANNED AERIAL VEHICLE AND METHOD OF CONTROL THEREOF**
AUTONOMES UNBEMANNTES LUFTFAHRZEUG UND STEUERUNGSVERFAHREN DAFÜR
VÉHICULE AÉRIEN SANS PILOTE AUTONOME ET SON PROCÉDÉ DE COMMANDE

(30) Priority: 21.12.2017 GB 201721523
(43) Date of publication of application: 07.10.2020
(73) Proprietor: AV8OR IP Limited, Swinton, Mexborough S64 8RN (GB)
(72) Inventor: KELLY, Graham Lee, Swinton, Mexborough S64 8RN (GB)
(74) Representative: Doherty, William
(86) International application number: PCT/GB2018/053654
(87) International publication number: WO 2019/122842

(56) References cited:
- EP-A2- 3 223 097
- WO-A1-2017/019595
- WO-A1-2017/100579
- GB-A- 2 441 643
- US-A1- 2014 236 388
- US-A1- 2016 284 221
- US-A1- 2017 285 631

## Description

The present invention relates to an autonomous unmanned aerial vehicle. A method of controlling a flight of an unmanned aerial vehicle without continuous in-flight human input is also provided.

At present, the majority of unmanned aerial vehicles are forced to operate in segregated airspace, primarily for the safety of manned aircraft. The few unmanned aerial vehicles that are permitted into manned airspace tend to be those operated by governmental military air forces, utilising technology which allows the unmanned aerial vehicle, often known as a drone, to be operated by a military remote pilot using satellite communication links with onboard systems which are largely equivalent with those of manned aircraft.

For commercial operations, there is no equivalent capability for unmanned aerial vehicles, due to legislative issues, as well as the prohibitive expense of operating above manned commercial operations.

At present, commercial operations are limited to small unmanned aerial vehicles, that is, no greater than 20kg in weight, with limitations on their maximum range and operating altitude, generally only being permitted to operate within visual range of the user, as well as being clear of any controlled airspace and other airspace users.

The efficacy of operation of the technology onboard unmanned aerial vehicles is reliant on the skill of the remote operator. In the event of a communication interruption or failure to a control unit of the remote operator, then there are limited options for recovery of the unmanned aerial vehicle itself. Where there is a communications fault, the unmanned aerial vehicle could automatically attempt to return to its take-off location. In the event of a propulsion fault, then, if properly equipped and programmed to do so, the unmanned aerial vehicle could sever a power supply to its propulsion systems and deploy a parachute. Whilst this may prevent catastrophic destruction of the unmanned aerial vehicle, there remains no control over the landing destination of the unmanned aerial vehicle, and there is still the potential for some damage to either the unmanned aerial vehicle or to third parties. Without the presence of a skilled operator, there is no capability for the unmanned aerial vehicle to control its descent.

Many unmanned aerial vehicles have autopilot or autonomous cruise control; however, this allows for stable flying conditions, and is not suitable for responsive or dynamic flight control.

An example of relevant prior art is US2014/0236388A1, which shows an aerial display system with floating pixels.

The present invention seeks to provide a system which is capable of providing an improved degree of autonomy for an unmanned aerial vehicle whilst maintaining an adequate level of safety in the event of failure.

According to a first aspect of the invention, there is provided an autonomous unmanned aerial vehicle comprising: an airframe body; at least one flight system mounted to the airframe body; an onboard flight controller which is adapted to control the or each flight system; a memory storage unit having machine-readable flight control instructions which are implementable by the onboard flight controller; an onboard feedback system which is communicatively coupled with the or each flight system to provide real-time internal flight characteristic data to the onboard flight controller; a navigation control system comprising a plurality of different navigation sensors and an external feedback system adapted to receive and provide to the onboard flight controller real-time external flight characteristic data, the external feedback system comprising at least one onboard sensor for determining real-time external flight characteristic data; wherein the onboard flight controller is arranged to receive mission parameter data from an external source, determine a pre-take-off flight plan in accordance with the mission parameter data and the navigation control system, and dynamically implement the machine-readable flight control instructions to adapt the pre-take-off flight plan to control the or each flight system based on the real-time internal flight characteristic data and real-time external flight characteristic data, and
wherein the onboard flight controller further comprises a conflict-resolution circuit adapted to simultaneously calculate, based on operating constraints of the unmanned aerial vehicle, a plurality of flight plan amendments having different routes in response to the detection of a potential conflict, the conflict-resolution circuit prioritizing the selection and implementation of one of the plurality of flight plan amendments for avoiding the potential conflict in as safe a manner as possible, characterised in that the conflict-resolution circuit utilizes machine learning weighted outcome decision making algortithms to prioritize and select the implementation of one of the plurality of flight plan amendments.

The provision of an unmanned aerial vehicle which is capable of dynamically modifying its flight plan in flight to ensure that it is able to resolve conflicts which may occur provides a major step towards autonomy for such vehicles. By removing the need for a constant remote operator of the unmanned aerial vehicle, the utility of unmanned aerial vehicles can be greatly enhanced, particularly for commercial operations. Not only can the unmanned aerial select from a set of possible safe-fail situations, but a set of possible conflict resolutions could also be determined and implemented in response to the determination of a particular conflict. This also allows the unmanned aerial vehicle to make a learned decision regarding the safest possible option for averting the conflict.

Preferably, the onboard flight controller may comprise a dedicated processor for modifying and controlling command functions for the at least one flight system.

More preferably, the at least one flight system may comprise at least one of: a thrust control system; a lift control system; a directional control system; a navigation control system; and a communications system.

If the said communications system is provided, the onboard flight controller may comprise a communications verification circuit for verifying an authenticity of incoming communication signals to the autonomous unmanned aerial vehicle. Said communications verification circuit may comprise at least one of: a geographical verification identifier; and a flight-stage verification identifier.

By providing a mechanism by which incoming communications to the unmanned aerial vehicle can be verified, the likelihood of hostile takeover of the unmanned aerial vehicle is significantly reduced. This can be linked to the expected flight plan for a more intelligent determination of whether hostile communications have been received.

Preferably, the plurality of different navigation sensors may comprise at least one satellite-navigation sensor and at least one non-satellite-navigation sensor. A diversification of navigation systems onboard the unmanned aerial vehicle can serve to protect the unmanned aerial vehicle from jamming attacks which can interrupt, for example, one form of navigation than another. The unmanned aerial vehicle will generally need to know its position accurately in order to act autonomously, and this diversification helps to ensure that the positional information is not lost.

Furthermore, the real-time external flight characteristic data may be indicative of one or more flight-relevant parameters including at least one of: air traffic control communications; airspace control data; environmental information data; mission parameter data; collision prediction data; safe landing information data; geographical information data; and payload information data.

Optionally, the mission parameter data may comprise at least one of: payload information data; a location objective; a target objective; and waypoint information data. In a preferred arrangement, the pre-take-off flight plan may be further determined in accordance with initial internal flight characteristic data and/or initial external flight characteristic data.

Preferably, the pre-take-off flight plan may be further determined in accordance with pre-determined default flight plan information data. Furthermore, the pre-determined default flight plan information data may comprise at least one of: geographical information data; airspace information data; and pre-organised airspace restriction information data. The pre-take-off flight plan need not necessarily be exclusively formed in accordance with a predetermined flight plan provided by ground control. Onboard information, such as weight and fuel capacity may be relevant to the operation of the unmanned aerial vehicle, as may be the weather situation.

The autonomous unmanned aerial vehicle may further comprise a ranking circuit for prioritizing the selection and implementation of one of a plurality of safe-fail operations for minimising the damage to persons or property on the ground. The ability to rank one or more safe-fail operations continuously during the flight of the unmanned aerial vehicle permits the assessment of the risk upon critical system failure to be determined in real-time, therefore hopefully averting the greatest dangers to persons or property at ground level which could be at risk were the unmanned aerial vehicle to crash unexpectedly during routine operation. The unmanned aerial vehicle is then able to take action to mitigate any potential risks via modification of its own flight plan.

The or each onboard sensor may in itself comprise at least one of: a camera; a laser-based sensor a proximity sensor; an automatic dependent surveillance - broadcast (ADS-B) sensor; and a satellite navigation sensor. The provision of onboard sensors of the unmanned aerial vehicle ensures that the necessary information to avert conflict in-flight is provided to the onboard flight controller. This allows the unmanned aerial vehicle to operate within any imposed airspace restrictions in a compliant manner. Preferably, the onboard flight controller may generate a 3D flight plan model based on the pre-take-off flight plan and the plurality of flight plan amendments. More preferably, the 3D flight plan model may be determined based on a blended input from the plurality of different navigation sensors and the or each onboard sensor and/or one or more databases. Preferably, the 3D flight plan model may comprise a flight environment model and a flight trajectory model.

Also disclosed is an unmanned aerial vehicle flight control system comprising: at least one autonomous unmanned aerial vehicle in accordance with the first aspect of the invention; and a flight management server which is remote to the or each autonomous unmanned aerial vehicle, the flight management server being wirelessly communicatively coupled to the external feedback system, such that the flight management server can provide at least part of the said real-time external flight characteristic data.

By providing unmanned aerial vehicles which are able to dynamically resolve conflicts themselves, the possibility of a ground control having no human operator also becomes possible. This is a significant improvement in the automation of the unmanned aerial vehicle technology, and in particular for its uptake in the commercial sector.

According to a second aspect of the invention, there is provided method of controlling a flight of an unmanned aerial vehicle without continuous in-flight human input, the method comprising the steps of: a] obtaining real-time internal flight characteristic data which is indicative of at least one flight system of the unmanned aerial vehicle; b] obtaining real-time external flight characteristic data which is indicative of flight-relevant parameters which are external to the unmanned aerial vehicle; c] the unmanned aerial vehicle receiving mission parameter data and determining a pre-take-off flight plan in accordance with the mission parameter data; d] dynamically implementing machine-readable flight control instructions based on the real-time internal flight characteristic data and real-time external flight characteristic data to adapt the pre-take-off flight plan to control flight of the unmanned aerial vehicle; e] simultaneously calculating, based on operating constraints of the unmanned aerial vehicle, a plurality of flight plan amendments having different routes in response to the detection of a potential conflict by a conflict-resolution circuit; and f] prioritizing the selection and implementation of one of the plurality of flight plan amendments for avoiding conflict in the safest manner, characterised in that the conflict-resolution circuit utilizes machine learning weighted outcome decision making algorithms to prioritize and select the implementation of one of the plurality of flight plan amendments.

The flight-relevant parameters may include at least one of: air traffic control communications; airspace control data; environmental information data; mission parameter data; collision prediction data; safe landing information data; geographical information data; and payload information data. The invention will now be more particularly described, by way of example only, with reference to the accompanying drawings, in which:
Figure 1 shows a diagrammatic representation of one embodiment of an autonomous unmanned aerial vehicle in accordance with the first aspect of the invention;
Figure 2 shows a diagrammatic representation of a first indicative flight plan for the unmanned aerial vehicle shown in Figure 1;
Figure 3 shows a diagrammatic representation of a first indicative flight plan for the unmanned aerial vehicle shown in Figure 1; and
Figure 4 shows a diagrammatic representation of the unmanned aerial vehicle of Figure 1, implementing a method in accordance with the second aspect of the invention.

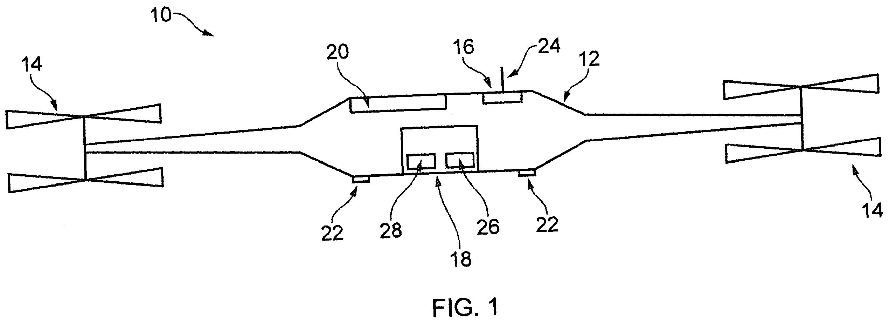

Referring to Figure 1, there is illustrated an unmanned aerial vehicle, indicated globally at 10, which is capable of autonomous flight and in particular autonomous adaptation of a pre-take-off flight plan. The unmanned aerial vehicles 10 in question in the present disclosure are 'beyond line-of-sight' (BLOS) craft, that is, those which leave the visual field of an operator at the take-off location. In particular, the unmanned aerial vehicles 10 discussed are intended to fall into the categories of medium- and high-altitude long-endurance unmanned aerial vehicles, which are respectively those suitable for use up to 3,000m altitude and having a range of 50km, and for use up to 5,500m altitude having a range of 160km.

The unmanned aerial vehicle 10 comprises an airframe body 12, which may be formed as a fixed-wing type of airframe or as a multicopter type of airframe, for example, to which is mounted at least one and preferably a plurality of different flight systems. In the present embodiment, the unmanned aerial vehicle 10 is depicted as having a multicopter-type airframe.

The flight systems associated directly with the airframe body 12 may include a thrust and/or directional control system 14, such as the multicopter propulsion units as illustrated, thereby providing a differential thrust system. As discussed, however, a fixed-wing type arrangement might include separate engines to provide thrust and wings, flaps or rudders to provide directional control.

For some unmanned aerial vehicles 10 it will be apparent that a de-icing system, for instance, coating on the airframe body 12 to repel ice formation, or pneumatic boot systems to dislodge ice, could be provided. This may be of particular importance where high-altitude missions are undertaken by the unmanned aerial vehicle 10.

A communications system 16 may be provided as a flight system of the unmanned aerial vehicle 10, preferably comprising a wireless communication means via which communications, such as orders, instructions or control signals may be sent to the unmanned aerial vehicle 10, for instance, from a remote controller or air traffic control. Outgoing communication means may also be provided as part of the communications system 16. Preferably, the communications system 16 will provide for encryption capability, to prevent interference with the unmanned aerial vehicle 10, for instance, via a denial of service attach, a man-in-the-middle type attack, a malware injection attack, or frequency jamming. Other cyber-defences for the unmanned aerial vehicle 10 could be considered, such as encasement of the onboard flight controller 18 in a Faraday cage.

Preferably, the communications system 16 is configured such that the onboard flight controller 18 may include a communications verification circuit. This can be arranged to determine an authenticity of incoming communications signals to the unmanned aerial vehicle 10. This may include a geographical verification identifier, and/or a flight-stage verification identifier, which may respectively determine whether a communications signal is received from an unexpected geographical location, for example on a communications frequency which is not associated with a particular local air traffic management, or whether a communications signal is received at an unexpected stage of the flight plan of the unmanned aerial vehicle 10. Either of these aspects may be indicative of a hostile attack on the communications system 16, and therefore identification and rejection of any command signals sent unexpectedly may be beneficial to continued operation of the unmanned aerial vehicle 10.A further flight system may be provided which comprises a navigation control system 20, which may be communicable with the communications system 16. The navigation control system 20 may comprise a positional locator, such as a GPS locator, and may preferably be formed as an inertial navigation system. The internal navigation system may comprise a plurality of accelerometers and/or gyroscopes which are positioned on the airframe body 12.

Navigational diversity may be important within the unmanned aerial vehicle, to prevent jamming-type attacks. For instance, a combination GPS/GLONASS/GALILEO 3 type of satellite navigation system could be considered, and/or there may be a confirmatory GPS input where an inertial navigation system is provided.

Furthermore, radio-frequency navigational aids may be provided, including VHF omni-directional radio range (VOR) systems, non-directional radio beacons (NDB), and distance measuring equipment (DME), which is a transponder-based radio navigation technology.

A plurality of different navigation sensors is provided, and preferably at least one of the navigation sensors will be a satellite-based navigation sensor, such as GPS, and at least one may be a non-satellite-based navigation sensor, such as a VOR system.

The navigation control system 20 may also comprise at least one sensor input, via which information may be relayed from one or more sensors 22 of the unmanned aerial vehicle 12, and/or one or more data input for receiving information from other relevant sources, such as from the communications system 16. Examples of sensors 22 which might be considered as part of the unmanned aerial vehicle 10 might include an optical sensor, for example, a camera or laser-based sensor such as LIDAR, and such a sensor 22 might be provided with image processing software, for example, to assist with conflict detection for the unmanned aerial vehicle 10. Proximity sensors could also be considered, for instance, using audiometric sensing, which may similarly assist with conflict detection.

Other sensors 22 could include an obstacle sensor, such as an ultrasonic or optical sensor based on the trajectory of the unmanned aerial vehicle 10, a radar altimeter to determine terrain issues, weather radar or forecast sensors to determine proximity to inclement weather, and/or 3D modelling sensors to determine possible conflict with other flying craft.

More standard aircraft sensor technology could also be provided as an onboard sensor for the unmanned aerial vehicle 10, such as a sensor reliant on automatic dependent surveillance - broadcast (ADS-B) technology, or similar satellite navigation technology. An aircraft transponder 24, for instance, Mode S equipment, could also be considered as a sensor 22.

Further flight systems of interest could include one or more memory storage devices 24 for the storage of flight-relevant data. This could include the standard flight recorder, for instance. Other flight-relevant data could include a real-time power and/or fuel reserve of the unmanned aerial vehicle 10, terrain data, notice to airmen (NOTAM) data, weather data, airspace data, and/or flight plan data.

Any or all of the flight-relevant data could be additionally or alternatively provided by an external source, for example, relayed to the unmanned aerial vehicle 10 via the communication system 16. This may be particularly important for weather data and NOTAM data, which may be updated more frequently than the other types of flight-relevant data.

The above listing of flight systems is not intended to be exhaustive, and any appropriate flight control, telemetric, sensing, or similar flight systems may be provided as part of the unmanned aerial vehicle 10.

The unmanned aerial vehicle 10 is provided with an onboard flight controller 18 which is in communication with the or each flight system. In particular, the onboard flight controller 18 is coupled with the thrust, lift and/or directional control system 14 so as to be able to control a flight path of the unmanned aerial vehicle 10 as necessary. However, the onboard flight controller 18 is also adapted so as to be able to obtain, via an onboard feedback system, real-time internal flight characteristic data which is indicative of at least one of the flight systems of the unmanned aerial vehicle 10, in addition to being adapted to obtain, via an external feedback system, real-time external flight characteristic data which is indicative of flight-relevant parameters which are external to the unmanned aerial vehicle 10.

The onboard flight controller 18 includes a dedicated processor 26 which is able to modify and control command functions for the flight systems. The processor 26 is coupled with a memory storage unit 28, which may be part of the onboard flight controller 18, upon which is stored machine-readable flight control instructions which are implementable by the onboard flight controller 18.

There will also likely be a payload support onboard the airframe body 12, and the form of this will depend upon a payload or payload type to be carried by the unmanned aerial vehicle 10. For example, in commercial contexts, the payload support may be designed to carry parcels or packages, most likely depending from an underframe of the airframe body 12. However, in a military context, the payload support may be a weapons mount, suitable for providing a stable base from which a missile, for instance, could be launched.

The onboard flight controller 18 is arranged to receive mission parameter data from an external source, which may be relayed to the unmanned aerial vehicle 10, or programmed locally, and then determine a pre-take-off flight plan in accordance with the mission parameter data. The onboard flight controller 18 is then able to dynamically implement the machine-readable flight control instructions to adapt the pre-take-off flight plan to control the or each flight system based on the real-time internal flight characteristic data and real-time external flight characteristic data.

The mission parameter data may include at least one of: payload information data; a location objective; a target objective; and waypoint information data. That is, the data may be indicative of one or more mission parameters for the unmanned aerial vehicle 10. For instance, payload information data may comprise information pertaining to the payload, for instance, its weight, any hazard indicators, and/or its effect on the flight capability of the unmanned aerial vehicle 10, such as any effect that the payload may have on the aerodynamics of the unmanned aerial vehicle 10.

A location objective may be a destination for the unmanned aerial vehicle 10, and may be an area rather than a fixed point. Waypoint information data may comprise locations of interest which the operator wishes the unmanned aerial vehicle 10 to fly via, for example, to complete secondary mission objectives, or to avoid particular no-fly zones. By contrast, a target objective could be a mobile target, such as an individual who may need to be rescued and/or otherwise targeted, or could be a group of such individuals, by way of example only.

In practice, this allows the unmanned aerial vehicle 10 to control its flight autonomously, as and when it receives flight-relevant information, either internal or external to itself. This is in stark contrast to unmanned aerial vehicles within the art which, at present, require near-constant input from a remote operator, and particularly in contexts in which conflict resolution may be required.

To clarify, existing unmanned aerial vehicles may accumulate information from a variety of sources, in particular with regards to the determination of collision detection. These sources are prioritized and analysed by a decision-making controller which is usually on the ground, and is therefore spaced from the flight envelope of the unmanned aerial vehicle itself. The various priorities of the information sources will be in constant flux, as collision prospects are altered as new threats are detected. This can lead to a relatively oscillatory flight path in reality.

In the instant invention, the central processor of the onboard flight controller 18 is within the flight envelope of the unmanned aerial vehicle 10. This may allow for the onboard creation of a 3D flight plan model by the processor 26 of the flight controller 18 which can be amended to proactively avoid upcoming issues which have been determined by the unmanned aerial vehicle 10, as will be outlined below in some exemplary scenarios.

The creation of the 3D computational model of the flight plan may be representative of the environment, that is, terrain and airspace, in a co-ordinate based system, for example x, y, z co-ordinates or latitude, longitude, altitude co-ordinates, as well as the location of the unmanned aerial vehicle 10 itself within the 3D model. As such the 3D flight plan model may comprise a flight environment model and a flight trajectory model, respectively indicative of the environment and the trajectory of the unmanned aerial vehicle 10. The processing power required to perform such calculations has previously been prohibitive onboard unmanned aerial vehicles due to the increased weight of the processor. However, it is presently possible to utilise a lightweight flight controller 18, given the weight reduction in processors 26 for a given computational power, that onboard processing can be achieved. Improved algorithmic analysis also allows such calculations of the 3D flight plan model to be determined in or near to real-time.

The improved accuracy of the positional data provided to the unmanned aerial vehicle 10 relative to its environment, within the 3D flight plan model, is gained by blending the feeds from the various sensors which provide positional data, for example, positional sensors such as the optical sensor 22, radio-frequency navigational aids, or aircraft transponder 24.

The addition of dynamic data, such as object data detected from, for instance obstacle sensors 22, can significantly improve the richness of the 3D flight plan model, since the unmanned aerial vehicle 10 becomes significantly more situationally-aware. Static time-based environmental data, such as the NOTAM data or weather data further improves the 3D flight plan model.

Once the 3D flight plan model has been created by the processor 26, then the processor 26 is capable of running one or more prediction algorithms based on the objects or obstacles detected within the 3D flight plan model, thereby creating a time-dependent 3D model. The processor 26 may preferably also identify patterns within the time-dependent 3D model, using, for example, a pattern-prediction circuit, which could result in potential conflict, and then, using the conflict-resolution circuit, determine potential options for the unmanned aerial vehicle 10, selecting a weighted success outcome which is most contextually appropriate. The pattern-prediction circuit may make use of machine learning for pattern recognition in order to determine conflicts, for example, by reinforcement learning.

The various options selectable by the conflict-resolution circuit may be selectable based on the operating constraints of the unmanned aerial vehicle 10, including but not limited to, air law, operating requirements according to the operator and/or mission parameters, and principles of flight for the type of unmanned aerial vehicle 10. The principles of flight for a given unmanned aerial vehicle 10 is transformed into its operating flight envelope that is calculated from formulas such as that for lift. An onboard internal model of its operating flight envelope capabilities, such as stall speed, never-exceed speed, operating ceiling hight, maximum lift, for example, is provided, and the processor 26 can determine the options available to the unmanned aerial vehicle 10 and make a weighted success outcome that means that the unmanned aerial vehicle 10 stays within its flight envelope, utilises a route which avoids conflicts as best as possible, and which maintains its mission directive. This can only be achieved with the present blended sensor approach to the determination of the unmanned aerial vehicle's 10 environment.

Of course, flight plan deviation of the unmanned aerial vehicle 10 externally may be required at some points, for example, at the insistence of air traffic control. In this instance, the unmanned aerial vehicle 10 would not cede control to air traffic control, but instead air traffic control is able to make a flight plan amendment request to the unmanned aerial vehicle 10, which can be accepted or declined, based on the parameters available to the unmanned aerial vehicle 10. For example, air traffic control may submit a request to the flight controller 18 which requires a flight plan amendments; however, the unmanned aerial vehicle 10 may be aware that it is unable to comply, for example, if it would result in a stall condition. In this instance, the unmanned aerial vehicle 10 can communicate with air traffic control to request different instructions, or alternatively, the unmanned aerial vehicle 10 may make a decision to avoid the controlled airspace altogether.

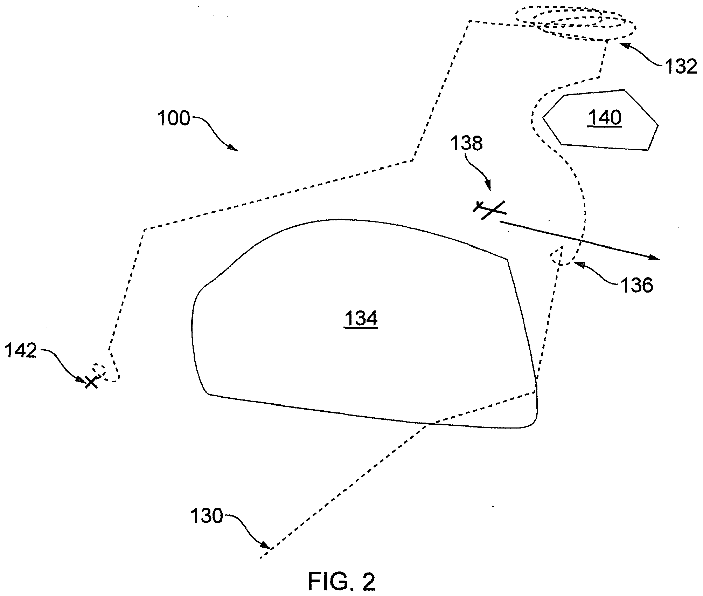

This capability is best illustrated by reference to an exemplary flight plan, such as that indicated generally at 100 in Figure 2. The unmanned aerial vehicle 10 will determine an initial flight plan at its take-off point or starting location 130, preferably in the form of a 3D model generated by the flight controller 18. This initial flight plan may be determined based on the destination 132 of the unmanned aerial vehicle 10, as well as any mission objective or priority objective information. The initial flight plan will likely be non-linear in 3D space based on known obstacles between the unmanned aerial vehicle 10 and its destination 132.

Other relevant information which might be uploaded or relayed to the unmanned aerial vehicle 10 might include information sent from ground control remotely or locally, such as payload mass, centre-of-gravity, NOTAM information, current weather information, or an indicative initial flight plan to follow. Any information sent by ground control may be sent over an encrypted channel via the communications system 16, and decrypted locally by the processor 26 to confirm the authenticity of any information sent across. Some of this information may not be initially available, and therefore must be received via the communications system 16 in-flight.

Ground control could be envisaged as a flight management server which is remote to the, or indeed a plurality of, autonomous unmanned aerial vehicle 10, with the flight management server being wirelessly communicatively coupled to an external feedback system of the unmanned aerial vehicle 10, such that the flight management server can provide at least part of real-time external flight characteristic data from which the flight plan can be formed in-flight.

Based on the initial flight plan as determined by the onboard flight controller 18, the unmanned aerial vehicle 10 is able to calculate an initial route, power requirement, thrust and control settings, as well as any other relevant variables. This can be used to determine a viability of a flight plan, and the processor 26 may include a verification circuit which is able to test for viability. An initially optimised flight plan wich avoids no-fly areas, for example, can therefore be created and plotted as a 3D flight plan.

Once determined, the unmanned aerial vehicle 10 may contact ground control and/or air traffic control to confirm take-off, and implementation of the flight plan. Both static and dynamic aeronautical information can then be used to inform the later flight plan of the unmanned aerial vehicle 10.

In the depicted scenario, the unmanned aerial vehicle 10 begins its flight along a first bearing, until it reaches a restricted airspace 134, of which it may not have been aware or uncertain as to how to circumvent at the point of creation of the initial flight plan. An amendment to the initial flight plan must therefore be made in-flight by the unmanned aerial vehicle 10. Since the flight is likely to have taken the unmanned aerial vehicle 10 out of local communication range of the starting location 130, the unmanned aerial vehicle 10 must now be able to make a decision about an amendment to the flight plan.

In existing arrangements, unmanned aerial vehicle will be reactive to conflicts as and when they arrive, in accordance with their pro-programmed priority logic. This usually results in a default reversion to manned operator control. In this instance, this will not be possible, and therefore in-flight proactive conflict resolution is required. This requires input from a plurality of different sensors which would not be present on existing unmanned aerial vehicles, such as the aircraft transponder 24, in order to allow the present unmanned aerial vehicle 10 to function.

The unmanned aerial vehicle 10 is able to contact the local air traffic management to request transit through the restricted airspace 134. Here, the air traffic management has directed the unmanned aerial vehicle 10 to modify its course through the restricted airspace 134 via the shortest route, rather than via its direct-most and preferred route. Machine-readable flight control instructions provided on the onboard controller 18 will permit the air traffic management instructions to request and/or take priority over the autonomous flight control, thereby allowing the unmanned aerial vehicle 10 to fly in a safe and compliant manner. This can be achieved via an in-flight modification to the flight plan, for example, by modification of the 3D flight plan model by the flight controller 18. The 3D flight plan model therefore becomes a blended 3D flight plan model, maintaining an optimised route to the destination 132 without the conflict control completely overriding the flight plan instructions of the unmanned aerial vehicle 10. As such, the onboard flight controller 18 may be configured to modify the 3D flight plan model by determining a plurality of different conflict resolution scenarios, preferably via a conflict-resolution circuit which is adapted to simultaneously determine a plurality of different flight plan amendments to avoid any conflict or potential impediments to the existing 3D flight plan model in as safe a manner as possible.

At present, unmanned aerial vehicles utilise a contingency handler to select a modular piece of code in response to specific criteria met from one of its sensors or information sources. However, the blended sensor approach of the present invention, in which a weight success outcome is selected based on a plurality of sensor inputs from a plurality of different options, is not achievable in the state of the art.

Preferably, the unmanned aerial vehicle 10 is able to contact the local air traffic management in advance of entry into the restricted airspace 134, typically by accessing an encrypted communications channel via the communications system 16. The advance contact with a known upcoming local air traffic management allows the unmanned aerial vehicle 10 to received air traffic control communications which are relevant to its prospective flight plan. This can be achieved without direct communication with the original owner or operator of the unmanned aerial vehicle 10, and therefore allows the unmanned aerial vehicle 10 to operate in a manner which is much more similar to that of a manned aircraft than a traditional unmanned aerial vehicle.

The unmanned aerial vehicle 10 may delay entry into the restricted airspace 134 until such a time as the local air traffic management has provided air traffic control communications. This may manifest as the unmanned aerial vehicle 10 taking an intermediate detour, and/or entering a holding pattern whilst it awaits a response. If there is a delay in response, or the air traffic control communications are unsatisfactory for optimum completion of the flight plan, then the unmanned aerial vehicle 10 may amend the flight plan to take an alternative route to its destination 132. In any event, this control logic is all provided onboard to the flight controller 18; there is no requirement for the unmanned aerial vehicle 10 to seek instructions from its operator.

In this manner, the unmanned aerial vehicle 10 is able to prompt air traffic control for updates with regards to the local air regulations, which significantly improves the capability for the unmanned aerial vehicle 10 to be able to make advance modifications to its flight plan without requiring dedicated and/or continuous human input.

Once the unmanned aerial vehicle 10 has vacated the restricted airspace 134, it can recalculate its flight plan, if necessary, though it is preferred that the blended 3D model approach is taken in which the optimized route to destination 132 is calculated by the flight controller 18 based on all available information to the unmanned aerial vehicle 10. En-route, the unmanned aerial vehicle 10 may then find itself in a conflict situation 136 with another aircraft 138, for example, with their respective trajectories overlapping and creating a potential for collision. In this scenario, the default of the machine-readable flight control instructions will likely be to defer to a manned aircraft 138, in which case, the onboard flight controller 18 will need to calculate a path of deviation for the unmanned aerial vehicle 10 to prevent a collision scenario.

This deviation presents an issue for autonomous unmanned aerial vehicle 10, in that further collision events or dangerous flight manoeuvres could result from the deviation. As such, the onboard flight controller 18 is configured so as to be able to determine a plurality of different conflict resolution scenarios, via the conflict-resolution circuit which is adapted to simultaneously determine a plurality of different flight plan amendments to avoid any conflict in as safe a manner as possible.

For example, one re-routing option may take the unmanned aerial vehicle 10 through a NOTAM exclusion zone, and another may result in a flyover of a city, both of which might be hazardous. The safest option might be to ascend or descend to a safe height, and circumvent the conflict in this manner. The selection of the most appropriate amendment to the flight plan will be in accordance with the machine-readable flight control instructions, and therefore will be context-dependent. In this manner, the unmanned aerial vehicle 10 is able to adapt to external flight characteristic data, in this case, the potential conflict.

Following the diversion, the unmanned aerial vehicle 10 may find itself in conflict with further obstacles, which may be regulatory in nature. Here, the flight plan as calculated will take the unmanned aerial vehicle 10 over a populated area 140, which is preferably avoided where possible. Once detected, the unmanned aerial vehicle 10 may attempt to circumvent overflight of the populated area 140, thereby plotting a safest course of action.

Eventually, the unmanned aerial vehicle 10 will arrive at its destination 132. In the present instance, the mission objective of the unmanned aerial vehicle 10 is to perform reconnaissance as part of a search and rescue mission. As such, the flight plan may involve flight over a small area to attempt to methodically determine the location of the target of interest. Such a mission may be improved by the unmanned aerial vehicle 10 maintaining radio silence, particularly in hostile territory, and therefore the importance of the autonomy of the unmanned aerial vehicle 10 is paramount.

This may, for example, be performed by using optical sensors 22 to identify thermal patterns which could be indicative of individuals at ground level. The unmanned aerial vehicle 10 may not necessarily process the images locally, but may communicate with ground control via the communications system 16.

At this point, ground control may rescind autonomous control functionality of the unmanned aerial vehicle 10, thereby providing more intelligent capabilities which can only be provided by a remote operator.

Once the mission parameters are complete, or the mission is abandoned, the unmanned aerial vehicle 10 will then begin a return trajectory, recalculating a flight plan accordingly. This may involve the use of historical information gathered during the outward flight, such as knowledge of the presence of the restricted airspace 134, to plot the route. As can be seen in Figure 2, the unmanned aerial vehicle 10 may fly its most direct route towards its initial take-off location 130, and then attempt to skirt around the restricted airspace 134 having foreknowledge of its existence.

In order to ensure that the flight plan is reflective of the status of the unmanned aerial vehicle 10, it has an onboard feedback system which is communicatively coupled with the or each flight system to provide real-time internal flight characteristic data to the onboard flight controller 18. In practice, this may be the relay of at least fuel and/or power information data to the onboard flight controller 18, to ensure that the unmanned aerial vehicle 10 is able to execute any particular manoeuvre determined by the dynamically-adapted flight plan.

Where there are deviations from expected behaviour, this may limit in particular the range of the unmanned aerial vehicle 10 to such a degree that the full return journey may not be possible. In this instance, an optimum safe-fail condition may be determined by the unmanned aerial vehicle 10 to permit it to land safely without causing damage to persons or property on the ground, as well as attempting to avoid damage to itself. An alternate landing location 142 may be determined, and the unmanned aerial vehicle 10 grounded in said location 142, preferably by deployment of safety equipment such as a parachute 44, or by controlled descent if there is sufficient power capability to do so.

Determination of the capability of the unmanned aerial vehicle 10 could be inferred from environmental conditions, determined from air data and outside temperature, as well as positional data sensors, the remaining power, determined from the power supply to the unmanned aerial vehicle 10, when taken in context with flight-determining sensors 22 such as air data, GPS, and the inertial navigation system, for instance, which allows for best- and/or worst-case flight endurance predictions to be made by the processor 26.

Once the unmanned aerial vehicle 10 has landed at the alternate landing location 142, if capable, it may then broadcast its position via encrypted communications through its communications system 16 to ground control, who may be able to then salvage the unmanned aerial vehicle 10 intact.

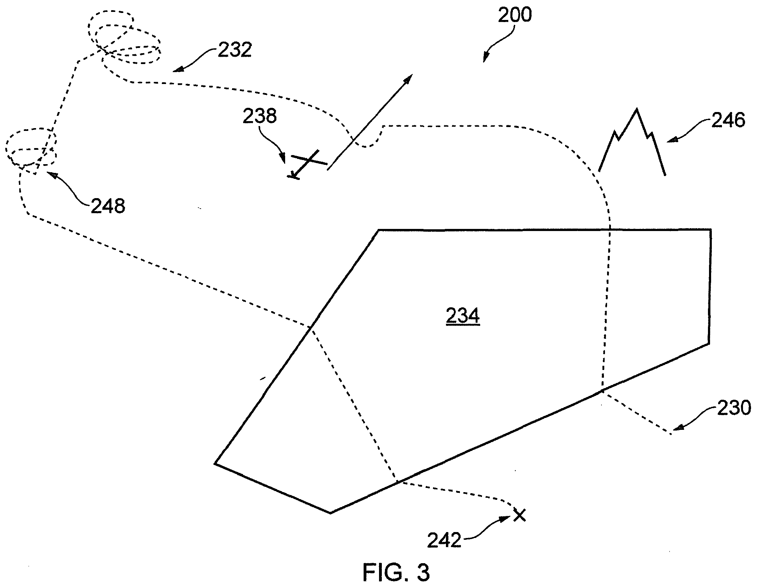

An alternative indicative flight plan is indicated at 200 in Figure 3, which shows other possible decision-making processes for the unmanned aerial vehicle 10.

As with the previous flight plan, the unmanned aerial vehicle 10 takes off from an initial location 230 in accordance with its predetermined flight plan as calculated by the onboard flight controller 18. Once again, it encounters a restricted airspace 234 in its initial flight.

The restricted airspace 234 in Figure 3 is less restrictive than that shown in Figure 2, in that the unmanned aerial vehicle is permitted to fly through, rather than directly out of the restricted airspace 234. However, flight instructions will most likely be provided by the local air traffic control in order to ensure that the unmanned aerial vehicle 10 flies in accordance with local conditions. These flight instructions may therefore be fed in as part of the 3D flight plan model which is managed by the flight controller 18, and a subsequent portion of the 3D flight plan model may be recalculated based on the amendment made to the flight plan.

Upon exit from the restricted airspace 234, there may be hazardous terrain 246 to navigate, which may be directly detected by sensors 22 onboard the unmanned aerial vehicle 10, or which may be preprogrammed in as geographical information to the onboard flight controller 18. The navigation control system 20 may be able to correlate a determined position of the unmanned aerial vehicle 10, for instance, via global positioning satellite navigation, to determine whether there is a risk posed by the hazardous terrain 246.

Similar deviations from the flight plan could be considered in many circumstances, for instance, in the event of inclement weather, such as ice, thunderstorms, high winds, or heavy rain, electrical interference, other geographic factors, or NOTAM-restricted airspace.

In any event, regardless of the unmanned aerial vehicle's 10 transit with regards to the hazardous terrain 246, the onboard flight controller 18 will recalculate the flight plan to determine a course towards the destination 232.

Again, any conflict with manned aircraft 238 can be overcome by sensing or otherwise determining the presence of the other aircraft 238, and correcting the flight plan accordingly.

At its initial destination 232, the unmanned aerial vehicle 10 may undertake a first mission objective, which may be a reconnaissance mission, before redirecting to a second destination 248 to perform a second mission objective. This differentiation between destinations may be set by providing waypoint information from mission command or ground control, thereby providing the ability to provide the unmanned aerial vehicle 10 with multi-faceted objectives.

Once certain mission thresholds have been achieved or failed, the unmanned aerial vehicle 10 may return to its take-off point 230. In this instance, no effort is made to circumvent the restricted airspace 234; the unmanned aerial vehicle 10 takes a direct route towards the take-off point 230.

Upon entering the restricted airspace 234, the local air traffic control may provide instructions to the unmanned aerial vehicle 10 to ensure that it is compliant with the rules of the restricted airspace 234. In doing so, the unmanned aerial vehicle 10 is depleted of power, and, upon exit from the restricted airspace 234, determines that it is unable to complete its return journey.

As such, the onboard flight controller 18 makes a determination as to a safest possible safe-fail operation which could be undertaken, which limits the potential for damage to persons or property on the ground, in addition to limiting the damage to the unmanned aerial vehicle itself. In this instance, an alternate landing site 242 is found.

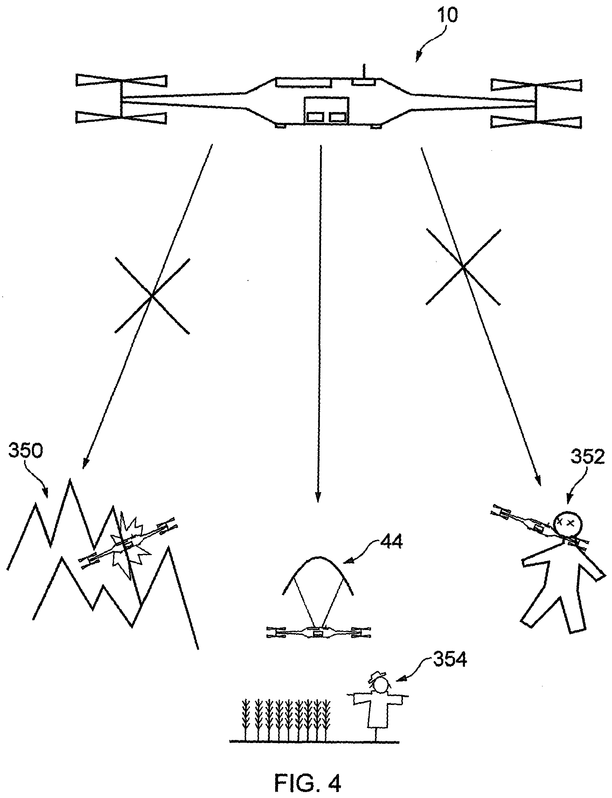

An indicative approach to ensuring safety during failure conditions is illustrated in Figure 4. The unmanned aerial vehicle 10 will utilise the onboard flight controller 18 to determine a set of possible safe-fail operations, in view of the information which is available to it. Here, three possible safe-fail scenarios are determined by the onboard flight controller 18.

Preferably, the unmanned aerial vehicle 10 will attempt to analyse the various options available to it, and continuously update at least one, and preferably at least three scenarios in which safe-fail operations are activated.

In a first scenario, indicated at 350, a catastrophic failure condition is calculated, in which the landing position is in hazardous terrain, and the unmanned aerial vehicle is almost certainly destroyed upon crash. Such a scenario is clearly not ideal, and therefore can be de-prioritized accordingly, based on the calculations of the processor 26.

In a second scenario, indicated at 352, the unmanned aerial vehicle 10 may be able to perform a more controlled descent, but over a populated or inhabited area. In this instance, the risk to persons on the ground will be high, particularly if there are failures of any of the flight-critical systems of the unmanned aerial vehicle 10. Again, a ranking circuit of the processor 26 may de-prioritize this scenario due to the inherent danger thereof.

In the third scenario, indicated at 354, the unmanned aerial vehicle is able to cut thrust over a depopulated area, and instead activate its parachute 44. This descent is slow, but there may then be limited directional control. However, of the three scenarios available to the unmanned aerial vehicle 10, this option seems preferable.

The ranking circuit of the processor 26 is able to assess the suitability of the various options available to the unmanned aerial vehicle 10, with the onboard flight controller 18 selecting and implementing the best safe-fail operation accordingly with a view to limiting the risk to persons, property, and the unmanned aerial vehicle 10 itself.

Depending on the use of the unmanned aerial vehicle 10, the relative importance of the various factors may be weighted accordingly. In most situations, it would be expected that ground safety is the most important concern; however, in warzones, the safety and/or destruction of the unmanned aerial vehicle could be more important, to prevent it from falling into enemy hands.

It is therefore possible to provide an unmanned aerial vehicle having control functionality which allows it to safely operate within the confines of regulated airspace, by providing the means for making in-flight decisions on a par with those of a human pilot. In doing so, the potential for conflict with existing aviation parameters is mitigated, with the unmanned aerial vehicle being able to operate autonomously in a safe and controlled manner without needing constant ground contact, which may be achieved via learned decision processing.

The words 'comprises/comprising' and the words 'having/including' when used herein with reference to the present invention are used to specify the presence of stated features, integers, steps or components, but do not preclude the presence or addition of one or more other features, integers, steps, components or groups thereof.

It is appreciated that certain features of the invention, which are, for clarity, described in the context of separate embodiments, may also be provided in combination in a single embodiment, as long as all embodiments fall within the scope defined by the appended claims.

Conversely, various features of the invention which are, for brevity, described in the context of a single embodiment, may also be provided separately or in any suitable sub-combination, as long as all embodiments fall within the scope defined by the appended claims.

The embodiments described above are provided by way of examples only, and various other modifications will be apparent to persons skilled in the field without departing from the scope of the invention as defined in the appended claims.

## Claims

1. An autonomous unmanned aerial vehicle (10) comprising:
an airframe body (12);
at least one flight system mounted to the airframe body (12);
an onboard flight controller (18) which is adapted to control the or each flight system;
a memory storage unit having machine-readable flight control instructions which are implementable by the onboard flight controller (18);
an onboard feedback system which is communicatively coupled with the or each flight system to provide real-time internal flight characteristic data to the onboard flight controller (18);
a navigation control system comprising a plurality of different navigation sensors; and
an external feedback system adapted to receive and provide to the onboard flight controller (18) real-time external flight characteristic data, the external feedback system comprising at least one onboard sensor for determining real-time external flight characteristic data;
wherein the onboard flight controller (18) is arranged to receive mission parameter data from an external source, determine a pre-take-off flight plan in accordance with the mission parameter data and the navigation control system, and dynamically implement the machine-readable flight control instructions to adapt the pre-take-off flight plan to control the or each flight system based on the real-time internal flight characteristic data and real-time external flight characteristic data; and
wherein the onboard flight controller (18) further comprises a conflict-resolution circuit adapted to simultaneously calculate, based on operating constraints of the unmanned aerial vehicle, a plurality of flight plan amendments having different routes in response to the detection of a potential conflict, the conflict-resolution circuit prioritizing the selection and implementation of one of the plurality of flight plan amendments for avoiding the potential conflict in as safe a manner as possible;
**characterised in that**
the conflict-resolution circuit utilizes machine learning weighted outcome decision making algorithms to prioritize and select the implementation of one of the plurality of flight plan amendments.

2. An autonomous unmanned aerial vehicle (10) as claimed in claim 1, wherein the onboard flight controller (18) comprises a dedicated processor (26) for modifying and controlling command functions for the at least one flight system.

3. An autonomous unmanned aerial vehicle (10) as claimed in claim 2, wherein the at least one flight system comprises at least one of: a thrust control system; a lift control system; a directional control system; a navigation control system; and a communications system (16).

4. An autonomous unmanned aerial vehicle (10) as claimed in any one of the preceding claims, wherein the plurality of different navigation sensors comprises at least one satellite-navigation sensor and at least one non-satellite-navigation sensor.

5. An autonomous unmanned aerial vehicle (10) as claimed in any one of the preceding claims, wherein the real-time external flight characteristic data is indicative of one or more flight-relevant parameters including at least one of: air traffic control communications; airspace control data; environmental information data; mission parameter data; collision prediction data; safe landing information data; geographical information data; and payload information data.

6. An autonomous unmanned aerial vehicle (10) as claimed in any one of the preceding claims, wherein the mission parameter data comprises at least one of: payload information data; a location objective; a target objective; and waypoint information data.

7. An autonomous unmanned aerial vehicle (10) as claimed in any one of the preceding claims, wherein the pre-take-off flight plan is further determined in accordance with pre-determined default flight plan information data.

8. An autonomous unmanned aerial vehicle (10) as claimed in any one of the preceding claims, further comprising a ranking circuit for prioritizing the selection and implementation of one of a plurality of safe-fail operations for minimising the damage to persons or property on the ground.

9. An autonomous unmanned aerial vehicle (10) as claimed in any one of the preceding claims, wherein the onboard flight controller (18) generates a 3D flight plan model based on the pre-take-off flight plan and the plurality of flight plan amendments.

10. An autonomous unmanned aerial vehicle (10) as claimed in claim 9, wherein the 3D flight plan model is determined based on a blended input from the plurality of different navigation sensors and the or each onboard sensor and/or one or more databases, and/or, wherein the 3D flight plan model comprises a flight environment model and a flight trajectory model.

11. A method of controlling a flight of an unmanned aerial vehicle (10) without continuous in-flight human input, the method comprising the steps of:
a] obtaining real-time internal flight characteristic data which is indicative of at least one flight system of the unmanned aerial vehicle (10);
b] obtaining real-time external flight characteristic data which is indicative of flight-relevant parameters which are external to the unmanned aerial vehicle (10);
c] the unmanned aerial vehicle receiving mission parameter data and determining a pre-take-off flight plan in accordance with the mission parameter data;
d] dynamically implementing machine-readable flight control instructions based on the real-time internal flight characteristic data and real-time external flight characteristic data to adapt the pre-take-off flight plan to control flight of the unmanned aerial vehicle (10);
e] simultaneously calculating, based on operating constraints of the unmanned aerial vehicle, a plurality of flight plan amendments having different routes in response to the detection of a potential conflict by a conflict-resolution circuit; and
f] prioritizing the selection and implementation of one of the plurality of flight plan amendments for avoiding conflict in the safest manner,
**characterised in that** the conflict-resolution circuit utilizes machine learning weighted outcome decision making algorithms to prioritize and select the implementation of one of the plurality of flight plan amendments.

12. A method as claimed in claim 11, wherein the flight-relevant parameters include at least one of: air traffic control communications; airspace control data; environmental information data; mission parameter data; collision prediction data; safe landing information data; geographical information data; and payload information data.

## Patentansprüche

1. Autonomes unbemanntes Luftfahrzeug (10), umfassend:
einen Flugwerkkörper (12);
mindestens ein Flugsystem, das an dem Flugwerkkörper (12) montiert ist;
eine Bordflugsteuerung (18), die dazu angepasst ist, das oder jedes Flugsystem zu steuern;
eine Speicherablagevorrichtung, aufweisend maschinenlesbare Flugsteueranweisungen, die durch die Bordflugsteuerung (18) implementierbar sind;
ein Bordrückmeldungssystem, das mit dem oder jedem Flugsystem kommunikativ gekoppelt ist, um interne Echtzeit-Flugkenndaten an die Bordflugsteuerung (18) bereitzustellen;
ein Navigationssteuersystem, umfassend eine Vielzahl von unterschiedlichen Navigationssensoren; und
ein externes Rückmeldungssystem, das dazu angepasst ist, externe Echtzeit-Flugkenndaten zu empfangen und an die Bordflugsteuerung (18) bereitzustellen, wobei das externe Rückmeldungssystem mindestens einen Bordsensor zum Bestimmen von externen Echtzeit-Flugkenndaten umfasst;
wobei die Bordflugsteuerung (18) dazu eingerichtet ist, Missionsparameterdaten von einer externen Quelle zu empfangen, einen Flugplan vor dem Abflug gemäß den Missionsparameterdaten und dem Navigationssteuersystem zu bestimmen und die maschinenlesbaren Flugsteueranweisungen dynamisch zu implementieren, um den Flugplan vor dem Abflug anzupassen, um das oder jedes Flugsystem auf der Basis der internen Echtzeit-Flugkenndaten und der externen Echtzeit-Flugkenndaten zu steuern; und
wobei die Bordflugsteuerung (18) ferner eine Konfliktlösungsschaltung umfasst, die dazu angepasst ist, auf der Basis von Betriebseinschränkungen des unbemannten Luftfahrzeugs eine Vielzahl von Flugplanänderungen, aufweisend unterschiedliche Routen, als Reaktion auf die Erkennung eines potenziellen Konflikts gleichzeitig zu berechnen, wobei die Konfliktlösungsschaltung die Auswahl und die Implementierung einer der Vielzahl von Flugplanänderungen priorisiert, um den potenziellen Konflikt so sicher wie möglich zu vermeiden;
**dadurch gekennzeichnet, dass** die Konfliktlösungsschaltung Algorithmen des maschinellen Lernens zur Entscheidungsfindung mit gewichtetem Ergebnis nutzt, um die Implementierung einer der Vielzahl von Flugplanänderungen zu priorisieren und auszuwählen.

2. Autonomes unbemanntes Luftfahrzeug (10) nach Anspruch 1, wobei die Bordflugsteuerung (18) einen dedizierten Prozessor (26) zum Modifizieren und Steuern von Befehlsfunktionen für das mindestens eine Flugsystem umfasst.

3. Autonomes unbemanntes Luftfahrzeug (10) nach Anspruch 2, wobei das mindestens eine Flugsystem mindestens eines von: einem Schubkraftsteuersystem; einem Auftriebssteuersystem; einem Richtungssteuersystem; einem Navigationssteuersystem und einem Kommunikationssystem (16) umfasst.

4. Autonomes unbemanntes Luftfahrzeug (10) nach einem der vorhergehenden Ansprüche, wobei die Vielzahl von unterschiedlichen Navigationssensoren mindestens einen Satellitennavigationssensor und mindestens einen Nicht-Satellitennavigationssensor umfasst.

5. Autonomes unbemanntes Luftfahrzeug (10) nach einem der vorhergehenden Ansprüche, wobei die externen Echtzeit-Flugkenndaten einen oder mehrere flugrelevante Parameter angeben, einschließend mindestens eines von: Flugsicherungskommunikationen; Luftraumkontrolldaten; Umgebungsinformationsdaten; Missionsparameterdaten; Kollisionsvorhersagedaten; sichere Landungsinformationsdaten; geografische Informationsdaten und Nutzlastinformationsdaten.

6. Autonomes unbemanntes Luftfahrzeug (10) nach einem der vorhergehenden Ansprüche, wobei die Missionsparameterdaten mindestens eines von: Nutzlastinformationsdaten; einer Ortzielvorgabe; einer Sollzielvorgabe und Wegpunktinformationsdaten umfassen.

7. Autonomes unbemanntes Luftfahrzeug (10) nach einem der vorhergehenden Ansprüche, wobei der Flugplan vor dem Abflug ferner gemäß vorbestimmten Standardflugplaninformationsdaten bestimmt wird.

8. Autonomes unbemanntes Luftfahrzeug (10) nach einem der vorhergehenden Ansprüche, ferner umfassend eine Rangordnungsschaltung zum Priorisieren der Auswahl und der Implementierung einer von einer Vielzahl von sicheren Ausfall-Operationen zum Minimieren des Schadens von Personen oder Immobilien auf dem Boden.

9. Autonomes unbemanntes Luftfahrzeug (10) nach einem der vorhergehenden Ansprüche, wobei die Bordflugsteuerung (18) ein 3D-Flugplanmodell auf der Basis des Flugplans vor dem Abflug und der Vielzahl von Flugplanänderungen erzeugt.

10. Autonomes unbemanntes Luftfahrzeug (10) nach Anspruch 9, wobei das 3D-Flugplanmodell auf der Basis einer gemischten Eingabe von der Vielzahl von unterschiedlichen Navigationssensoren und dem oder jedem Bordsensor und/oder einer oder mehreren Datenbanken bestimmt wird, und/oder wobei das 3D-Flugplanmodell ein Flugumgebungsmodell und ein Flugbahnmodell umfasst.

11. Verfahren zur Steuerung eines Flugs eines unbemannten Luftfahrzeugs (10) ohne kontinuierliche menschliche Eingabe während des Fluges, wobei das Verfahren die Schritte umfasst:
a] Beziehen von internen Echtzeit-Flugkenndaten, die mindestens ein Flugsystem des unbemannten Luftfahrzeugs (10) angeben;
b] Beziehen von externen Echtzeit-Flugkenndaten, die flugrelevante Parameter angeben, die extern zu dem unbemannten Luftfahrzeug (10) sind;
c] Empfangen von Missionsparameterdaten durch das unbemannte Luftfahrzeug und Bestimmen eines Flugplans vor dem Abflug gemäß den Missionsparameterdaten;
d] dynamisches Implementieren von maschinenlesbaren Flugsteueranweisungen auf der Basis der internen Echtzeit-Flugkenndaten und der externen Echtzeit-Flugkenndaten, um den Flugplan vor dem Abflug anzupassen, um den Flug des unbemannten Luftfahrzeugs (10) zu steuern;
e] gleichzeitiges Berechnen einer Vielzahl von Flugplanänderungen, aufweisend unterschiedliche Routen, auf der Basis von Betriebseinschränkungen des unbemannten Luftfahrzeugs als Reaktion auf die Erkennung eines potenziellen Konflikts durch eine Konfliktlösungsschaltung;
f] Priorisieren der Auswahl und der Implementierung einer der Vielzahl von Flugplanänderungen zum sichersten Vermeiden eines Konflikts,
**dadurch gekennzeichnet, dass** die Konfliktlösungsschaltung Algorithmen des maschinellen Lernens zur Entscheidungsfindung mit gewichtetem Ergebnis nutzt, um die Implementierung einer der Vielzahl von Flugplanänderungen zu priorisieren und auszuwählen.

12. Verfahren nach Anspruch 11, wobei die flugrelevanten Parameter mindestens eines von: Flugsicherungskommunikationen; Luftraumkontrolldaten; Umgebungsinformationsdaten; Missionsparameterdaten; Kollisionsvorhersagedaten; sichere Landungsinformationsdaten; geografische Informationsdaten und Nutzlastinformationsdaten einschließen.

## Revendications

1. Un véhicule aérien sans pilote autonome (10) comprenant :
un corps de cellule (12) ;
au moins un système de vol monté sur le corps de la cellule (12) ;
un contrôleur de vol embarqué (18) qui est adapté pour contrôler le ou chaque système de vol ;
une unité de stockage mémoire contenant des instructions de contrôle de vol lisibles par machine, qui peuvent être exécutées par le contrôleur de vol embarqué (18) ;
un système de rétroaction embarqué qui est couplé de manière communicative avec le ou chaque système de vol pour fournir en temps réel au contrôleur de vol embarqué (18) des données internes relatives aux caractéristiques de vol ;
un système de contrôle de navigation comprenant une pluralité de capteurs de navigation différents ; et
un système de rétroaction externe, adapté à recevoir et à fournir au contrôleur de vol embarqué (18) des données externes relatives aux caractéristiques de vol en temps réel, le système de rétroaction externe comprenant au moins un capteur embarqué pour déterminer ces données externes relatives aux caractéristiques de vol ;
dans lequel le contrôleur de vol embarqué (18) est agencé pour recevoir des données de paramètres de mission provenant d'une source externe, déterminer un plan de vol avant le décollage conformément aux données de paramètres de mission et au système de contrôle de navigation, et mettre en œuvre dynamiquement les instructions de contrôle de vol lisibles par machine pour adapter le plan de vol avant le décollage afin de contrôler le ou chaque système de vol en fonction des données internes relatives aux caractéristiques de vol en temps réel et des données externes relatives aux caractéristiques de vol en temps réel; et
dans lequel le contrôleur de vol embarqué (18) comprend en outre un circuit de résolution de conflit adapté pour calculer simultanément, sur la base des contraintes de fonctionnement du véhicule aérien sans pilote, une pluralité de modifications de plan de vol ayant des itinéraires différents en réponse à la détection d'un conflit potentiel, le circuit de résolution de conflit donnant la priorité à la sélection et à la mise en œuvre de l'une de la pluralité de modification de plan de vol pour éviter le conflit potentiel de la manière la plus sûre possible ;
**caractérisé en ce que** le circuit de résolution de conflits utilise des algorithmes d'apprentissage automatique pour la prise de décision avec résultats pondérés afin de prioriser et de sélectionner la mise en œuvre de l'une des pluralités de modification du plan de vol.

2. Un véhicule aérien sans pilote autonome (10) selon la revendication 1, dans lequel le contrôleur de vol embarqué (18) comprend un processeur dédié (26) pour modifier et contrôler les fonctions de commande pour le ou au moins un système de vol.

3. Un véhicule aérien sans pilote autonome (10) selon la revendication 2, dans lequel le ou au moins un système de vol comprend au moins l'un des éléments suivants : un système de contrôle de poussée ; un système de contrôle de portance ; un système de contrôle directionnel ; un système de contrôle de la navigation ; et un système de communication (16).

4. Un véhicule aérien sans pilote autonome (10) selon l'une quelconque des revendications précédentes, dans lequel la pluralité de différents capteurs de navigation comprend au moins un capteur de navigation par satellite et au moins un capteur de navigation non satellite.

5. Un véhicule aérien sans pilote autonome (10) selon l'une quelconque des revendications précédentes, dans lequel les données externes relatives aux caractéristiques de vol en temps réel sont indicatives d'un ou plusieurs paramètres pertinents pour le vol, comprenant au moins l'un des éléments suivants : communications de contrôle du trafic aérien ; données de contrôle de l'espace aérien ; données d'informations environnementales ; données de paramètres de mission ; données de prédiction de collision ; données d'informations d'atterrissage en toute sécurité ; données d'informations géographiques ; et données d'informations de charge utile.

6. Un véhicule aérien sans pilote autonome (10) selon l'une quelconque des revendications précédentes, dans lequel les données de paramètres de mission comprennent au moins l'un des éléments suivants : des données d'informations de charge utile ; un objectif de localisation ; un objectif cible ; et des données d'informations de route vers point de cheminement.

7. Un véhicule aérien sans pilote autonome (10) selon l'une quelconque des revendications précédentes, dans lequel le plan de vol avant décollage est en outre déterminé conformément à des données d'informations de plan de vol par défaut prédéterminées.

8. Un véhicule aérien sans pilote autonome (10) selon l'une quelconque des revendications précédentes, comprenant en outre un circuit de classement pour prioriser la sélection et la mise en œuvre d'une opération parmi une pluralité d'opérations de sécurité en cas de panne afin de minimiser les dommages causés aux personnes ou aux biens au sol.

9. Un véhicule aérien sans pilote autonome (10) selon l'une quelconque des revendications précédentes, dans lequel le contrôleur de vol embarqué (18) génère un modèle de plan de vol 3D basé sur le plan de vol avant décollage et la pluralité de modifications de plan de vol.

10. Un véhicule aérien sans pilote autonome (10) selon la revendication 9, dans lequel le modèle de plan de vol 3D est déterminé sur la base d'une entrée mixte provenant de la pluralité de différents capteurs de navigation et du ou de chaque capteur embarqué et/ou d'une ou plusieurs bases de données, et/ou, dans lequel le modèle de plan de vol 3D comprend un modèle d'environnement de vol et un modèle de trajectoire de vol.

11. Un procédé de contrôle du vol d'un véhicule aérien sans pilote (10) sans intervention humaine continue en vol, le procédé comprenant les étapes suivantes :
a] obtenir des données internes en temps réel relatives aux caractéristiques de vol, représentatives d'au moins un système de vol du véhicule aérien sans pilote (10) ;
b] obtenir des données internes en temps réel relatives aux caractéristiques de vol qui indiquent des paramètres pertinents pour le vol qui sont externes au véhicule aérien sans pilote (10) ;
c] le véhicule aérien sans pilote recevant des données de paramètres de mission et déterminant un plan de vol avant le décollage conformément aux données de paramètres de mission ;
d] la mise en œuvre dynamique d'instructions de contrôle de vol lisibles par machine, sur la base des données internes relatives aux caractéristiques de vol en temps réel et des données externes relatives aux caractéristiques de vol en temps réel, afin d'adapter le plan de vol avant le décollage pour contrôler le vol du véhicule aérien sans pilote (10) ;
e] calculer simultanément, en fonction des contraintes d'exploitation du véhicule aérien sans pilote, une pluralité de modifications de plan de vol ayant des itinéraires différents en réponse à la détection d'un conflit potentiel par un circuit de résolution de conflit ; et
f] prioriser la sélection et la mise en œuvre de l'une des multiples modifications du plan de vol pour éviter les conflits de la manière la plus sûre, **caractérisé en ce que** le circuit de résolution de conflits utilise des algorithmes d'apprentissage automatique pour la prise de décision avec résultats pondérés afin de prioriser et de sélectionner la mise en œuvre de l'une des pluralités de modifications du plan de vol.

12. Un procédé selon la revendication 11, dans lequel les paramètres pertinents pour le vol comprennent au moins l'un des éléments suivants : communications de contrôle du trafic aérien ; données de contrôle de l'espace aérien ; données d'informations environnementales ; données de paramètres de mission ; données de prédiction de collision ; données d'informations d'atterrissage en toute sécurité ; données d'informations géographiques ; et données d'informations de charge utile.
